# EUROPEAN PATENT APPLICATION

(11) **EP 4 675 096 A1**
(43) Date of publication of application: **07.01.2026**
(21) Application number: 25186741.2
(22) Date of filing: 01.07.2025
(51) Int. Cl.: F02C 7/32, F01D 9/06

(54) **POWER FEEDER CABLE CONDUIT FOR HYBRID ELECTRIC GAS TURBINE ENGINES AND FAN MOUNTED MOTOR CONTROLLERS**

(30) Priority: 01.07.2024 US 202418760885
(71) Applicant: RTX Corporation, Farmington, CT 06032 (US)
(72) Inventor: CLARK, Thomas E., Wells, 04090 (US); CHOE, Jung Muk, Glastonbury, 06033 (US)
(74) Representative: Dehns

(57) **Abstract**

An apparatus comprising a plurality of power feeder cables (136) for transferring power between an electrical machine (128) located within an engine core of a gas turbine engine (102) and power controllers (132) located on a fan casing (138) of the gas turbine engine (102). A conduit housing (134) defines an interior for enclosing the plurality of power feeder cables (136). A first connector (140) connects a first point on the conduit housing (134) to the engine core of the gas turbine engine (102). A second connector (142) connects a second point on the conduit housing (134) to a trailing edge flange of the fan casing (138) of the gas turbine engine (102).

## Description

### TECHNICAL FIELD

This disclosure relates generally to a power feeder cable conduit. More specifically, this disclosure relates to a power feeder cable conduit for fan mounted power controllers in a gas turbine engine, such as a hybrid electric gas turbine engine.

### BACKGROUND

Gas turbine engines, such as hybrid electric gas turbine engines, integrate electrical machines along with power electronics within the engine. In a high bypass ratio ducted fan, the fan case surrounding the hybrid electric gas turbine engine provides a convenient and environmentally controlled location for the sensitive hybrid electric power electronics. For gas turbine engines with core mounted gear boxes, the electrical machines are mounted within the core compartment of the engine. The electrical machines are mechanically coupled to the high and low power spools of the hybrid electric gas turbine engine via a gear assembly. Hybrid electric control and diagnostic signals as well as electric power are sent and received between the electrical machines and the power electronics. This requires power feeder and data cables to be routed between the engine fan case and the engine core compartment. Within hybrid electric gas turbine engines, the number of electrical connections between the engine fan case and the engine core compartment are orders of magnitude higher than in a classical or non-hybrid gas turbine engine. For hybrid electric gas turbine engines numerous high voltage feeder cables are routed between the fan case and the engine core compartment. It is of critical interest within hybrid gas turbine engine to minimize the space required to package the power feeder cables while simultaneously managing the power feeder cables with respect to temperature, electromagnetic emissions and interference and engine fire safety.

### SUMMARY

This disclosure relates to a power feeder cable conduit for a gas turbine engine such as a hybrid electric gas turbine engine.

In a first embodiment, the apparatus includes a plurality of power feeder cables for transferring power between an electrical machine located within an engine core of a gas turbine engine, such as a hybrid electric gas turbine engine and power controllers located on a fan case of the gas turbine engine. A conduit housing defines an interior for enclosing the plurality of power feeder cables. A first connector connects a first point on the conduit housing to the engine core of the gas turbine engine. A second connector connects a second point on the conduit housing to a trailing edge flange of the fan case of the gas turbine engine.

Implementations may include one or more of the following features in any combination. The apparatus may include at least one firewall incorporated within the conduit. The apparatus may include a plurality of mechanical mounts located within the conduit housing for connecting the plurality of power feeder cables to the conduit housing to reduce displacements of the plurality of power feeder cables, and a damper associated with each of the plurality of mechanical mounts to reduce vibration loads on the plurality of power feeder cables. The housing is constructed of a material to mitigate radiative heat loads and electromagnetic signals on the plurality of power feeder cables. The location of the plurality of power feeder cables within the conduit housing define a plurality of spaces therebetween for routing the sourced nacelle air to cool the plurality of power feeder cables. The first connector may connect at the first point on the conduit housing to a lower bifurcation of the engine core of the hybrid electric gas turbine engine. The first connector may connect at the first point on the conduit housing to an accessory gearbox of the engine core of the hybrid electric gas turbine engine. The plurality of power feeder cables may include flat, flexible power cables. The conduit housing may include a first portion and a second portion, the first portion removably connected to the second portion to enable access to the plurality of power feeder cables within the conduit housing.

In a second embodiment, the apparatus also includes a plurality of power feeder cables for transferring power between an electrical machine located within an engine core of a gas turbine engine, such as a hybrid electric gas turbine engine, and power controllers located on a fan case of the gas turbine engine. A conduit housing defines an interior for enclosing the plurality of power feeder cables. The conduit housing is constructed of a material to mitigate radiative heat loads and electromagnetic signals for the power feeder cables. The conduit housing may include a first portion and a second portion, The first portion removably connected to the second portion to enable access to the plurality of power feeder cables within the conduit housing. A first connector connects a first point on the conduit housing to the engine core of the gas turbine engine. A second connector connects a second point on the conduit housing to a trailing edge flange of the fan case of the gas turbine engine.

Implementations may include one or more of the following features in any combination. The apparatus may include at least one firewall incorporated within the conduit. The apparatus may include a plurality of mechanical mounts located within the conduit housing for connecting the plurality of power feeder cables to the conduit housing to reduce displacements of the plurality of power feeder cables, and a damper associated with each of the plurality of mechanical mounts to reduce vibration loads on the plurality of power feeder cables. The location of the plurality of power feeder cables within the conduit housing define a plurality of spaces therebetween for routing the sourced nacelle air to cool the plurality of power feeder cables. The first connector may connect at the first point on the conduit housing to a lower bifurcation of the engine core of the hybrid electric gas turbine engine. The first connector may connect at the first point on the conduit housing to an accessory gearbox of the engine core of the hybrid electric gas turbine engine. The plurality of power feeder cables may include flat, flexible power cables.

In a third embodiment, the apparatus also includes a plurality of power feeder cables for transferring power between an electrical machine located within an engine core of a gas turbine engine, such as a hybrid electric gas turbine engine, and power controllers located on a fan case of the gas turbine engine. A conduit housing defines an interior for enclosing the plurality of power feeder cables. The conduit housing constructed of a material to mitigate radiative heat loads and electromagnetic signals on the plurality of power feeder cables. An input receives sourced nacelle air from the hybrid electric gas turbine engine. Location of the plurality of power feeder cables within the conduit housing define a plurality of spaces therebetween for routing the sourced nacelle air to cool the plurality of power feeder cables. A first connector connects a first point on the conduit housing to the engine core of the gas turbine engine. A second connector connects a second point on the conduit housing to a trailing edge flange of the fan case of the gas turbine engine.

Implementations may include one or more of the following features in any combination. The apparatus may include a plurality of mechanical mounts located within the conduit housing connect the plurality of power feeder cables to the conduit housing to reduce displacements of the plurality of power feeder cables. A damper associated with each of the plurality of mechanical mounts reduces vibration loads for the plurality of power feeder cables. The first connector may connect at the first point on the conduit housing to an accessory gearbox of the engine core of the hybrid electric gas turbine engine. The conduit housing may include a first portion and a second portion, he first portion removably connected to the second portion to enable access to the plurality of power feeder cables within the conduit housing.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIG. 1 illustrates a schematic view a hybrid electric gas turbofan engine having a power feeder cable conduit;
FIG.2 illustrates the interconnection of electric machines mounted within the engine core and power controllers mounted on the fan casing of the hybrid electric gas turbine engine;
FIG. 3 illustrates a power conduit using flat cable connectors; and
FIG. 4 illustrates a perspective view of a power feeder cable conduit mounted between the core of the hybrid electric gas turbine engine and the fan casing.

### DETAILED DESCRIPTION

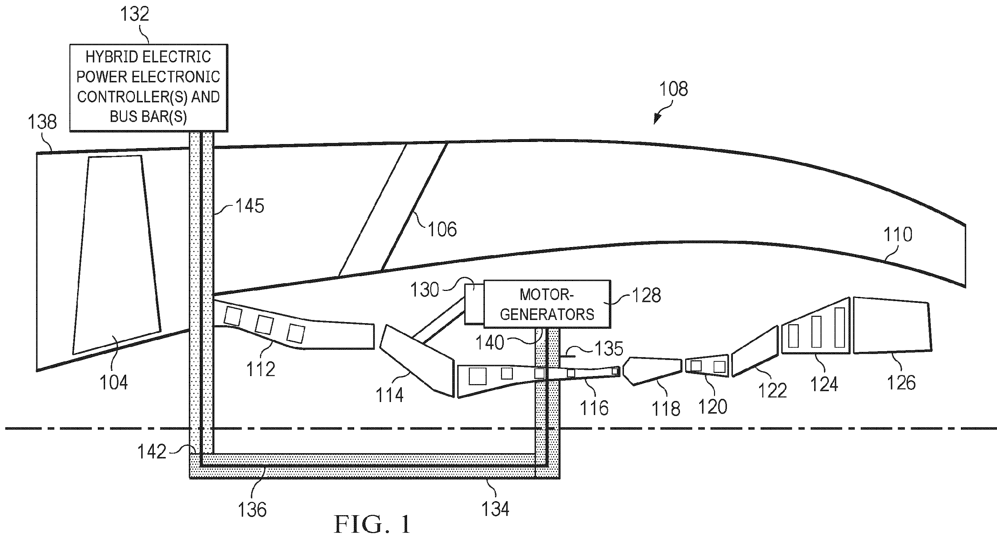

FIGS. 1 through 4, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIG. 1 illustrates a schematic diagram for a hybrid electric gas turbine engine 102. Air that is sucked into the nacelle 108 passes through the rotor fan 104 and past the fan exit guide vanes 106 between the outer surface of the nacelle 108 and a nacelle inner flow surface 110 as well as passing to the combustion portion of the hybrid electric gas turbine engine 102. The combustion portion of the hybrid electric gas turbine engine 102 consists of the low-pressure compressor 112, compressor frame 114, high-pressure compressor 116, combustion chamber 118, high-pressure turbine 120, turbine frame 122, low-pressure turbine 124 and exhaust frame 126. Electric motors and generators 128 are located within the lower bifurcation of the engine core of the hybrid electric gas turbine engine 102 and are powered by an accessory gearbox 130. The electric motors and generators 128 are controlled via hybrid electric power electronics controllers 132 and associated bus bars located on the fan casing 138 of the hybrid electric gas turbine engine 102.

Control of the electric motors and generators 128 located within the lower bifurcation of the engine core is carried out by the hybrid electric power electronic controllers 132 located on the fan casing 138. However, in order to transmit power and control signals between the electric motors/generators 128 and the hybrid electric power electronic controllers 132 control and power cabling must be provided between the electric motor/generators and hybrid electric power controllers. This is provided by a power feeder cable conduit 134 that includes power feeder cables 136 located therein. While the illustration of FIG. 1 shows a single power feeder cable 136, by way of example, it will be realized that multiple power feeder cables will likely be implemented within the power feeder cable conduit 134.

The integration of power feeder cables 136 provide a challenge from the perspective of physical installation. By enclosing the power feeder cables 136 within a power feeder cable conduit 134, the conduit can be interconnected with the nacelle lower bifurcation of a ducted hybrid electric gas turbine engine 102. The conduit 134 spans from a core mounted accessory gearbox 130 to the engine fan casing 138. Power feeder cables 136 are internally integrated into the conduit 134 to provide power to and from the hybrid electric machines consisting of electric motors and generators 128. Two mounting points are provisioned along the conduit 134. A first mounting point 140 is located at an electric motor/generator 128 coupled to the accessory gearbox 130. A second mounting point 142 is located at the trailing edge flange of the fan case 138. A second optional power feeder cable conduit 145 may be provided from the second mounting point 142 to the hybrid electric power electronic controllers 132 to protect wiring that is being run from point 142 to the hybrid electric power electronic controllers 132, as illustrated.

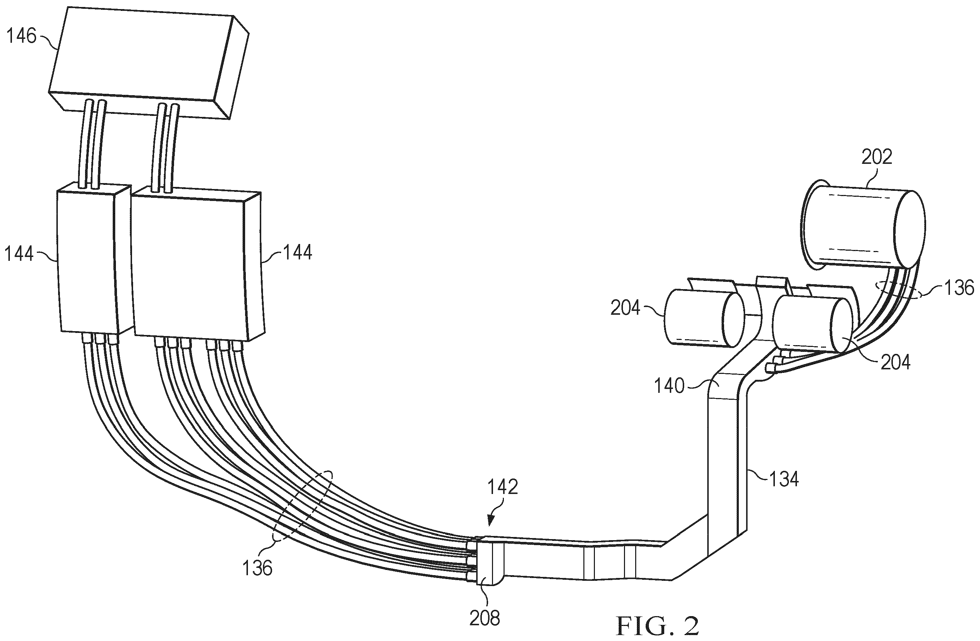

Referring now to FIG. 2, there is illustrated the manner in which power feeder cable conduit 134 used to interconnect electric motor/generators 128 (FIG. 1) and hybrid electric power electronic controllers 132 (FIG. 1) of a hybrid electric engine. The electric motor/generators 128 comprise components such as a LP (limited power) emachine 202 and HEP (head-end power) emachines 204. The power feeder cables 136 are connected from the LP emachine 202 and HEP emachines 204 and are passed into the power feeder cable conduit 134. The power feeder cable conduit 134 contains all of the power feeder cables 136 between mounting points 140 and 142 of the conduit. The power feeder cables exit the power feeder cable conduit 134 at mounting point 142. The power feeder cables 136 are then interconnected with the electric power controller 132 include motor control units (MCUs) 144 and the DC bus bar 146.

Ventilation is provided to the power feeder cable conduit 134 from nacelle air sourced from the lower bifurcation of the hybrid electric gas turbine engine 102. The sourced nacelle air is routed through an input 135 in the power feeder cable conduit 134 in order to cool the power feeder cables 136 passing through the conduit 134. The power feeder cable conduit 134 is constructed of a metallic and/or dielectric material that mitigates radiative heat loads and/or electromagnetic signals to the power feeder cables 136 within the conduit. The power feeder cable conduit 134 may also include a firewall 208 that may be internal and/or external (e.g., mounted on, coupled to, affixed to an inner surface and/or an outer surface of the power feeder cable conduit 134) to separate designated fire zones from non-fire zones within the hybrid electric gas turbine engine 102.

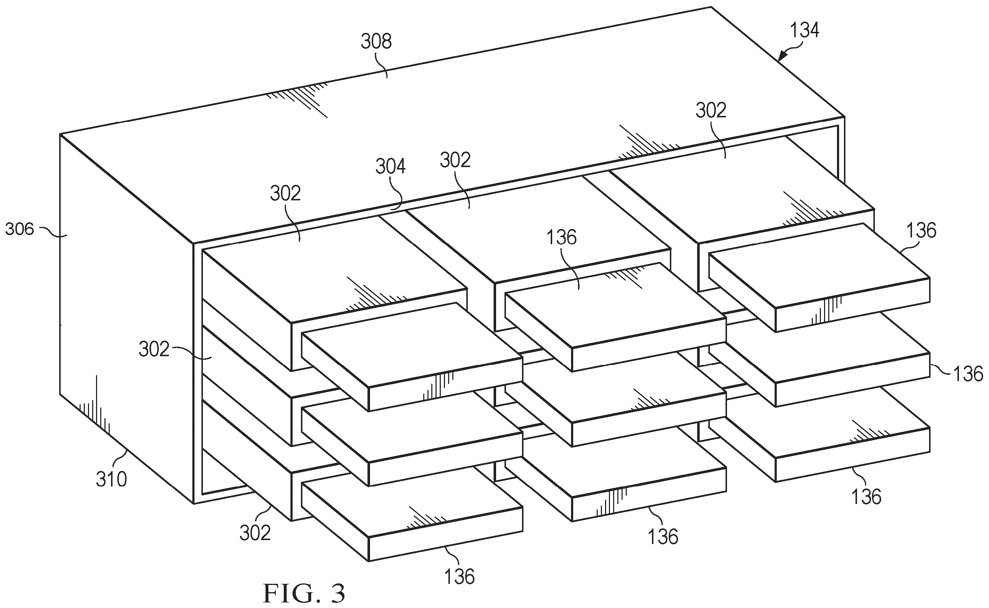

Referring now to FIG. 3, there is illustrated a perspective view of a power feeder cable conduit 134 that includes nine separate power feeder cables 136. As illustrated in FIG. 3, the power feeder cables 136 may include flexible flat rectangular cables. In some examples, the power feeder cable conduit 134 may include a flat rectangular shape. Mechanical mounts 302 with dampers are provisioned internally within the conduit 134 to reduce vibrational loads and displacements of the power feeder cables 136 within the conduit 134. As can be seen, spaces 304 are defined between the power feeder cables 136 to enable the ventilation of the sourced nacelle air to be provided through the power feeder cable conduit 134 to cool the power feeder cables. While the illustration of the power feeder cables 136 in FIG. 3 show flat rectangular cables, it will be appreciated that round power cables or power cables having other configurations may be utilized as appropriate. Additionally, the housing 306 surrounding the power feeder cables 136 may be configured to have a top portion 308 and a bottom portion 310 wherein the top portion 308 is removably connected to the lower portion 310 to enable removal of the top portion 308 from the bottom portion to expose the internal power feeder cables 136 and enable maintenance thereof.

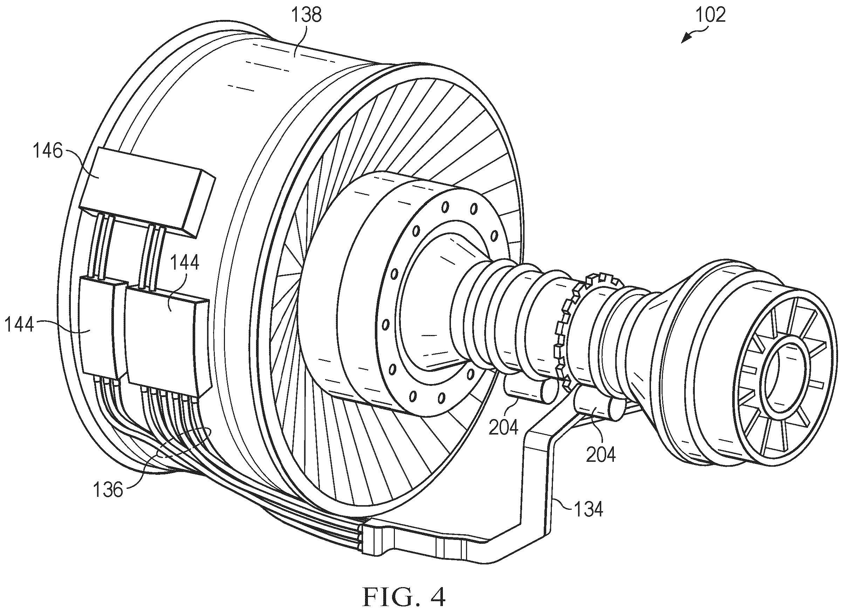

Referring now to FIG. 4, there is more particularly illustrated the structure illustrated with respect to FIG. 2 connected to the hybrid electric gas turbine engine 102. The MCUs 144 and DC bus bar 146 are mounted on the surface of the engine fan casing 138. The HEP machines 204 and the LP emachine 202 (not shown) are mounted to the lower bifurcation of the engine core. The power feeder cable conduit 134 provides a confined pathway enabling the power feeder cables 136 to be run between the components on the lower bifurcation of the engine core and the fan casing 138. The material from which the conduit 134 is constructed protects the power feeder cables 136 from radiative heat loads and electromagnetic signals.

The power feeder cable conduit 134 for interconnecting electric motor/generators 128 (FIG. 1) including HEP e-machines 204 located at the lower bifurcation of the engine core and the hybrid electric power electronic controllers 132 (FIG. 1) comprising MCUs 144 and the DC bus bar 146 on the fan casing138 provides a number of benefits to the hybrid electric gas turbine engine 102. The ability to protect the power feeder cables 136 using the housing 306 of the conduit and to pass air through the spaces 304 within the conduit 134 provides improved thermal management of the power feeder cables. The conduit 134 provides for controlled ventilation of power feeder cables 136 that are routed between the engine fan casing 138 and the lower bifurcation of the engine core compartment. The volume of the conduit 134 reduces ventilation mass-flow requirements compared to configurations without conduits. The conduit 134 acts as a heat shield and reduces radiative heat loading onto the power feeder cables 136 from the hot engine compartment. The power feeder cable conduit 134 improves engine integration by reducing the number of freely routed cables between the engine fan casing 138 and the core engine compartment. Power feeder cables 136 may be consolidated into a single conduit providing for ease of installation. Additional benefits include the reduction in the cable length that is exposed to hot core temperatures of the engine compartment.

The damped mountings within the conduit 134 provides for improved management of engine vibration and loads. The mechanical mounts 302 and dampers internal to the conduit 134 reduces vibrational loads throughout the power feeder cables 136. The conduit 134 also provides for improved firewall provisioning and fire containment management. The conduit 134 acts as a single nacelle bifi penetration along the lower bifurcation thus reducing penetrations from (n) (where n is the number of power feeder cables 136) to (1). The conduit 134 provides for modular serviceability such that the two-piece conduit consisting of a top proportion 308 and bottom portion 310 may be separated while installed on the hybrid electric engine for servicing of individual feeder cables or bus bars.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A hybrid electric gas turbine engine (102) comprising;
a fan casing (138);
an engine core;
a plurality of power feeder cables (136) for transferring power between an electrical machine (128) located within the engine core and power controllers (132) located on the fan casing (138);
a conduit housing (134) defining an interior for enclosing the plurality of power feeder cables (136);
a first connector (140) for connection at a first point on the conduit housing (134) to the engine core; and
a second connector (142) for connection at a second point on the conduit housing (134) to a trailing edge flange of the fan casing (138)

2. The engine (102) of claim 1, further comprising at least one firewall (208) incorporated within the conduit (134).

3. The engine (102) of claim 1 or 2, further comprising:
a plurality of mechanical mounts (302) located within the conduit housing (134) for connecting the plurality of power feeder cables (136) to the conduit housing (134) to reduce displacements of the plurality of power feeder cables (136); and
a damper associated with each of the plurality of mechanical mounts (302) to reduce vibration loads on the plurality of power feeder cables (136).

4. The engine (102) of any preceding claim, wherein the conduit housing (134) is constructed of a material to mitigate radiative heat loads and electromagnetic signals on the plurality of power feeder cables (136).

5. The engine (102) of any preceding claim, further comprising an input (135) for receiving sourced nacelle air, wherein location of the plurality of power feeder cables (136) within the conduit housing (134) define a plurality of spaces (304) therebetween for routing the sourced nacelle air to cool the plurality of power feeder cables (136).

6. The engine (102) of any preceding claim, wherein the first connector (140) connects at the first point on the conduit housing (134) to a lower bifurcation of the engine core of the gas turbine engine (102).

7. The engine (102) of any of claims 1 to 5, wherein the first connector (140) connects at the first point on the conduit housing (134) to an accessory gearbox (130) of the engine core of the gas turbine engine (102).

8. The engine (102) of any preceding claim, wherein the plurality of power feeder cables (136) comprises flat, flexible power cables.

9. The engine (102) of any preceding claim, wherein the conduit housing (306) comprises a first portion (308) and a second portion (310), the first portion (308) removably connected to the second portion (310) to enable access to the plurality of power feeder cables (136) within the conduit housing (306).
